# EUROPÄISCHE PATENTSCHRIFT

(11) **EP 0 374 715 B1**
(45) Veröffentlichungstag und Bekanntmachung des Hinweises auf die Patenterteilung: **24.05.1995**
(21) Anmeldenummer: 89123019.5
(22) Anmeldetag: 13.12.1989
(51) Int. Cl.: H04N 7/00

(54) **Fernsehsystem mit Einrichtungen zur Anpassung von sendeseitig und empfangsseitig erzeugtem Fernsehbildformat**
Television system with devices for adapting a television picture format generated at the transmitt side and at the receiver side
Système de télévision avec dispositifs d'adaptation du format de l'image de télévision obtenu à l'émetteur et au récepteur

(30) Priorität: 21.12.1988 DE 3842941
(43) Veröffentlichungstag der Anmeldung: 27.06.1990
(73) Patentinhaber: Grundig E.M.V. Elektro-Mechanische Versuchsanstalt Max Grundig GmbH & Co. KG, 90762 Fürth (DE)
(72) Erfinder: Kays, Rüdiger, Dr. Ing. GRUNDIG E.M.V. Max Grundig, D-8510 Fürth/Bay. (DE)

(56) Entgegenhaltungen:
- EP-A- 0 213 911
- WO-A-86/05644
- FR-A- 2 586 332

## Beschreibung

Die Erfindung betrifft ein Fernsehsystem nach dem Oberbegriff des Patentanspruchs 1.

Für zukünftige Fernsehsysteme mit erhöhter Bildqualität wird eine Änderung des Bildseitenverhältnisses von 4:3 auf 16:9 angestrebt. Hierfür vorgesehene Fernsehempfänger mit geändertem Bildseitenverhältnis müssen aber auch die bisherige Fernsehnorm mit dem Bildseitenverhältnis von 4:3 wiedergeben können. Herkömmliche Fernsehempfänger weisen unter anderem einen mit dem Bild-ZF-Demodulator verbundenen Videosignal-Prozessor und einen Ablenkprozessor mit Synchronimpulsabtrennung und -Aufbereitung zur Steuerung der Farbbildröhre auf.

Zur relativen Änderung des Fernsehbildformats ist aus der DE-A-36 27 401 eine Einrichtung bekannt, bei der ein Rastergröße-Wählsignal decodiert wird, um von mehreren möglichen Bildhöhen/Bildbreiten-Kombinationen eine zu bestimmen und der Ablenkprozessor steuert entsprechend um. Hierfür ist im Fernsehempfänger ein hoher Schaltungsaufwand erforderlich.

Zur Reduzierung von Flimmerstörungen wird im zunehmenden Maße im Fernsehempfänger eine Signalverarbeitungschaltung mit Speichereinrichtungen eingesetzt (vgl. beispielsweise Zeitschrift "Siemens Components 26" (1988), Heft 6, Seiten 240 - 245).

Weiterhin ist aus der internatonalen Patentanmeldung WO-A-8605644 zur empfangsseitigen Anpassung des Bildformats 4:3 in einem 16:9-Fernsehempfänger bekannt, eine Zeittransformation des Videosignals mittels Zeilenspeicher vorzunehmen. Hierzu wird das zeilenweise abgespeicherte Videosignal mit einem Taktsignal höherer Taktfrequenz (im Verhältnis 4:3) ausgelesen. Da der zeitlich komprimierte Teil der Zeile das sichtbare Bildfeld nicht ausfüllt, wird eine Zentrierung des Bildes durch Verzögerung des Auslesevorgangs vorgenommen.

Eine völlig andere Möglichkeit wird beim aus der EP-A3-0 213 911 bekannten Fernsehsystem vorgeschlagen. Um sichtbare Artefakte zu vermeiden, wird senderseitig das mit einer 5:3-Fernsehkamera aufgenommene Bild senderseitig nur im links- und rechtsseitigen Randbereich der Zeile zeitlich komprimiert, während der Mittenbereich unverändert bleibt. Mittels eines Steuersignals, welches sendeseitig erzeugt und im Fernsehempfänger ausgewertet wird, erfolgt automatisch die zeitliche Dehnung auf ursprüngliches Bildformat für die Darstellung auf einem 5:3-Fernsehempfänger.

Schließlich ist für die Darstellung von unterschiedlichen Schriftgrößen auf einem Monitor ein weiterer neuer Weg in der FR-A1-2 586 332 aufgezeigt worden. Zur relativen Änderung der Schriftgröße wird im Monitor ein Steuersignal decodiert, um eine von mehreren möglichen Schriftgrößen (hinsichtlich Schriftbreite bzw. -höhe) zu bestimmen. Entspechend diesem dadurch bestimmten Verhältnis wird die Horizontal- bzw. Vertikal-Ablenksteuerschaltung umgesteuert.

Der Erfindung liegt die Aufgabe zugrunde, ein Fernsehsystem mit verschiedenen Formaten derartig auszugestalten, daß empfangsseitig mit geringem zusätzlichen Aufwand eine Umsteuerung zum möglichst Bildformat füllenden Breitbild ermöglicht wird.

Diese Aufgabe wird bei einem gattungsgemäßen Fernsehsystem durch die kennzeichnenden Merkmale des Patentanspruchs 1 gelöst.

Das erfindungsgemäße Fernsehsystem erfordert nur einen relativ geringen zusätzlichen Schaltungsaufwand im Fernsehempfänger, insbesondere wenn zur Reduzierung von Flimmerstörungen ohnehin eine Signalverarbeitungsschaltung mit Speichereinrichtungen vorgesehen ist. Weiterhin weist das erfindungsgemäße Fernsehsystem den Vorteil auf, daß Fernsehempfänger mit Farbbildröhre oder auch Flüssigkristall-Anzeigeeinrichtungen mit matrixförmig angeordneten Bildelementen benutzt werden können.

Das erfindungsgemäße Fernsehsystem erfordert keine Veränderung des Wiedergaberasters zur Erzeugung des kombinierten Bildes und die Farbe des eingeblendeten Rahmens kann entsprechend gewählt werden.

Weiterhin kann auf einfache Art und Weise, in Abhängigkeit vom sendeseitig erzeugten Bildformat, im Fernsehempfänger zusätzliche eine Umsteuerung der Abtasteinrichtung in vertikaler Richtung vorgenommen werden, so daß bei unverändertem Wiedergaberaster das sichtbare Bildfeld ausgefüllt ist.

Zur automatischen, kompatiblen Änderung des Bildformats gemäß Patentanspruch 2 ist nur ein geringer zusätzlicher sendeseitiger und empfangseitiger Schaltungsaufwand erforderlich. Die sendeseitige Erzeugung eines Steuersignals und die empfangsseitige Auswertung dieses Steuersignals ist an sich aus der Zeitschrift "Fernseh- und Kino-Technik, 42. Jahrgang, Nr. 6, 1988, Seiten 265 - 274, insbesondere Seite 271, linke Spalte" bekannt.

Die Ausführungsform des Fernsehsystems nach Anspruch 3 weist den Vorteil auf, daß sendeseitig kein Steuersignal erzeugt werden muß, sondern die im Fernsehempfänger angeordnete Detektionsschaltung die entsprechende Umsteuerung vornimmt.

Der Schaltungsaufwand für die Umsteuerung ist besonders gering, wenn gemäß Patentanspruch 4 durch den Benutzer manuell ein entsprechendes Steuersignal erzeugt wird.

Die Erfindung wird im folgenden anhand unterschiedlicher sendeseitiger und empfangsseitiger Bildformate näher beschrieben und erläutert. Die in der Zeichnung skizzierten verschiedenen Formate betreffen einen Fernsehempfänger mit Farbbildröhre und einer Wiedergabe der empfangenen Fernsehsignale entsprechend der Fernsehnorm. Beim erfindungsgemäßen Fernsehsystem kann auch ein Fernsehempfänger benutzt werden, bei dem die empfangenen Fernsehsignale mit einer gegenüber der Fernsehnorm höheren Bildfolgefrequenz und Zeilenfrequenz wiedergegeben werden.

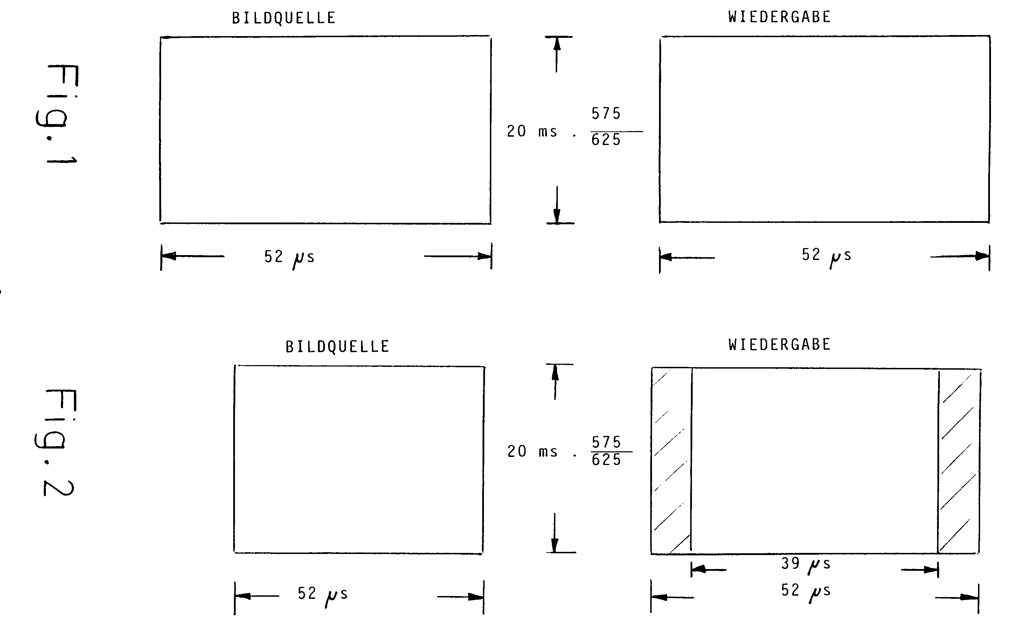

Bei den in Fig. 1 dargestellten sendeseitigen und empfangsseitigen Bildformaten beschreiben die angegebenen Zeiten, wie lange der Elektronenstrahl zum Überstreichen des Bildfeldes benötigt. Die Übertragung der Breitbild-Fernsehsignale erfolgt beispielsweise über MAC-Übertragungsstrecken und werden, da gleiches Bildseitenverhältnis von 16:9 sendeseitig und empfangsseitig vorliegt, direkt wiedergegeben.

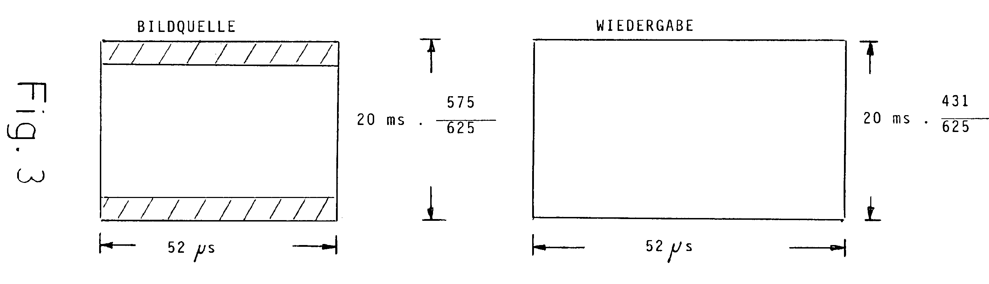

Bei dem in Fig. 2 dargestellten Fall wird Bildmaterial mit einem 4 : 3 Seitenverhältnis im Fernsehempfänger empfangen, wobei der sichtbare Teil einer Zeile die Horizontal-Periode von 52 »s einnimmt. Da der Fernsehempfänger ein hierzu unterschiedliches Bildseitenverhältnis aufweist, wird in der im Videosignal-Prozessor des Fernsehempfängers angeordneten Einrichtung, welche mindestens einen Zeilenspeicher enthält, eine Zeittransformation vorgenommen. Hierbei wird das zwischengespeicherte Videosignal mit einem Taktsignal höherer Taktfrequenz ausgelesen und das so zeitlich komprimierte Signal von beispielsweise 39 »s Dauer in das unveränderte Wiedergaberaster eingefügt. Der Rest der sichtbaren Zeile wird beispielsweise schwarzgetastet.

Bei dem in Fig. 3 dargestellten Fall wird sendeseitig ein Kinofilm mit Breitwandformat oder einer elektronischen Breitbildproduktion (z.B. HDMAC), beispielsweise dem Format 16:9 abgetastet. Die sendeseitig angeordnete Abtasteinrichtung enthält beispielsweise zeilenförmig angeordnete optoelektronische Wandler, mit denen Zeilenspeicher verbunden sind, aus welchen die Fernsehsignale entsprechend der Fernsehnorm ausgelesen werden. Bei dem in Fig. 3 dargestellten Fall enthalten nur 431 Zeilen ein Bildsignal, während durch die schraffierten Flächen am oberen und unteren Bildrand angedeutet werden soll, daß in diesem Bereich keine Bildinformation vorliegt. Empfangsseitig kann nun durch Umsteuerung der Vertikalablenkung mit dem Bildsignal das sichtbare Bildfeld ausgefüllt werden, so daß die schwarzen Streifen am Bildrand bei der Wiedergabe unterdrückt werden. Die Umsteuerung kann anhand eines sendeseitig erzeugten und im Empfänger detektierten Steuersignals erfolgen. Eine weitere Ausführungsform zur automatischen Umsteuerung im Fernsehempfänger, bei der ein solches sendeseitig erzeugtes Steuersignal nicht erforderlich ist, ist dadurch gekennzeichnet, daß im Fernsehempfänger eine Detektionsschaltung zur Detektion dieser Ränder angeordnet ist. Dadurch wird im Fernsehempfänger das empfangene kleine Breitbild mit Rand durch entsprechende Umsteuerung zum Bildformat füllenden neuen großen Breitbild.

Der Aufwand im Fernsehempfänger ist besonders gering, wenn manuell durch den Benutzer die Umsteuerung in vertikaler Richtung vorgenommen wird.

## Patentansprüche

1. Fernsehsystem mit Einrichtungen zur Anpassung von sendeseitig und empfangsseitig erzeugtem Fernsehbildformat, bei dem sendeseitig Fernsehsignale entsprechend der Fernsehnorm mit unterschiedlichem Bildformat erzeugt werden und bei dem empfangsseitig mit der Eingangsschaltung im Fernsehempfänger ein Videosignal-Prozessor und eine Abtasteinrichtung zur Steuerung der Bildanzeigeeinrichtung verbunden sind, wobei mittels einer im Videosignal-Prozessor angeordneten Einrichtung, welche mindestens einen Zeilenspeicher enthält, eine Zeittransformation des Videosignals in Abhängigkeit vom sendeseitig erzeugtem Fensehbildformat dadurch vorgenommen wird, daß der Videosignal-Prozessor das zeilenweise im Speicher abgespeicherte Videosignal mit einem Taktsignal höherer Taktfrequenz ausliest,
**dadurch gekennzeichnet**, daß im Falle der sendeseitigen Erzeugung eines Bildes im Format 4 : 3 zur Darstellung auf einem 16 : 9-Fernsehempfänger der Videosignalprozessor ein kombiniertes Bild aus zeitlich komprimierter, gesamter Zeile des sendeseitigen Videosignals und synthetisch erzeugtem Rahmenwert zusammensetzt und daß im Falle der sendeseitigen Erzeugung einen Bildes aus einem Breitbild, welches im Format 4 : 3 unter Eintastung schwarzer Zeilen am oberen und unteren Bildrand eingebettet wird, im 16 : 9-Fernsehempfänger eine Umsteuerung der Abtasteinrichtung in vertikaler Richtung derartig vorgenommen wird, daß bei in horizontaler Richtung unverändertem Wiedergaberaster das sichtbare Bildfeld ausgefüllt wird.

2. Fernsehsystem nach Anspruch 1, **dadurch** **gekennzeichnet**, daß zur automatischen Umsteuerung im Fernsehempfänger sendeseitig ein Steuersignal erzeugt wird, welches im Fernsehempfänger ausgewertet wird.

3. Fernsehsystem nach Anspruch 1, **dadurch** **gekennzeichnet**, daß im Fernsehempfänger eine Detektionsschaltung zur Detektion eines sendeseitig synthetisch erzeugten Rahmenwertes angeordnet ist, und daß die mit der Detektionsschaltung verbundene Abtasteinrichtung in vertikaler Richtung derartig umgesteuert wird, daß bei unverändertem Wiedergaberaster das sichtbare Bildfeld ausgefüllt ist.

4. Fernsehsystem nach Anspruch 1, **dadurch gekennzeichnet,** daß durch den Benutzer ein Steuersignal zur Umsteuerung der Abtasteinrichtung in vertikaler Richtung erzeugbar ist.

## Claims

1. Television system with devices for adjusting television-picture format generated at the transmission end and reception end, in which television signals are generated at the transmission end according to the television standard with different picture format and in which a video-signal processor and a scanning device for controlling the picture display device are associated at the reception end with the input circuit in the television receiver, a time transformation of the video signal being carried out as a function of the television-picture format generated at the transmission end by means of a device which is fitted in the video-signal processor and which contains at least one line memory, as a result of the fact that the video-signal processor reads out the video signal stored line by line in the memory with a clock signal of higher clock frequency, characterized in that, in the case of the generation of a picture in the format 4:3 at the transmission end, the video-signal processor assembles a combined picture comprising a time-compressed complete line of the video signal at the transmission end and a synthetically generated frame value for the purpose of display on a 16:9 television receiver, and in that, in the case of the generation, at the transmission end, of a picture comprising a wide picture which is embedded in the format 4:3 by fading-in black lines at the top and bottom picture edge, a switchover of the scanning device in the vertical direction is carried out in the 16:9 television receiver in such a way that the visible picture area is filled with the reproduction raster being unaltered in the horizontal direction.

2. Television system according to Claim 1, characterized in that, for the purpose of automatic switchover in the television receiver, a control signal which is evaluated in the television receiver is generated at the transmission end.

3. Television system according to Claim 1, characterized in that a detection circuit for detecting a frame value synthetically generated at the transmission end is fitted in the television receiver, and in that the scanning device associated with the detection circuit switches over in the vertical direction in such a way that the visible picture area is filled with the reproduction raster being unaltered.

4. Television system according to Claim 1, characterized in that a control signal for switching over the scanning device in the vertical direction can be generated by the user.

## Revendications

1. Système de télévision comportant des dispositifs pour adapter les formats d'images de télévision produits côté émission et côté réception, et dans lequel, côté émission, des signaux de télévision sont produits conformément à la norme de télévision avec un format d'image différent, et dans lequel, côté réception, un processeur de signaux vidéo et un dispositif de balayage pour la commande du dispositif d'affichage d'images sont reliés au circuit d'entrée situé dans le récepteur de télévision, et dans lequel une transformation temporelle du signal vidéo est exécuté en fonction du format de l'image de télévision produit côté émission, au moyen d'un dispositif situé dans le processeur de signaux vidéo et qui contient au moins une mémoire de lignes, de telle sorte que le processeur de signaux vidéo lit le signal vidéo, qui est mémorisé suivant des lignes dans la mémoire, avec un signal de cadence ayant une fréquence supérieure, caractérisé en ce que, dans le cas de la production, côté émission, d'une image ayant le format 4:3 pour sa représentation dans un récepteur de télévision 16:9, le processeur de signaux vidéo réunit une image combinée formée à partir d'une ligne totale, comprimée dans le temps, du signal vidéo côté émission et d'une valeur cadre produite de façon synthétique, et que dans le cas de la production côté émission d'une image à partir d'une image large qui est insérée dans la format 4:3 moyennant l'introduction de lignes noires au niveau du bord supérieur et du bord inférieur de l'image, une inversion de commande du dispositif de balayage dans la direction verticale est réalisée dans le réception de télévision 16:9 de telle sorte que le plan d'image visible est rempli, dans le cas où le canevas de reproduction est inchangé dans la direction horizontale.

2. Système de télévision selon la revendication 1, caractérisé en ce que pour l'inversion de commande automatique dans le récepteur de télévision, un signal de commande, qui est évalué dans le récepteur de télévision, est produit côté émission.

3. Système de télévision selon la revendication 1, caractérisé en ce qu'un circuit de détection servant à détecter une valeur cadre produite de façon synthétique côté émission, est disposé dans le récepteur de télévision et que la commande du dispositif de balayage, qui est relié au circuit de détection, est inversée dans la direction verticale de telle sorte que dans le cas d'un canevas de reproduction inchangé, le champ d'image visible est rempli.

4. Système de télévision selon la revendication 1, caractérisé en ce qu'un signal de commande servant à inverser la commande du dispositif de balayage dans la direction verticale peut être produit par l'utilisateur.
